# NOUVEAU FASCICULE DE BREVET EUROPEEN

(11) **EP 1 119 258 B2**
(45) Date de publication et mention de la décision concernant l'opposition: **23.11.2011**
(45) Mention de la délivrance du brevet: 19.04.2006
(21) Numéro de dépôt: 98947599.1
(22) Date de dépôt: 05.10.1998
(51) Int. Cl.: A23C 9/123, A23C 9/142, A23C 9/13, A23C 19/076

(54) **PRODUITS LAITIERS FERMENTES A FAIBLE ACIDITE AROMATISES AVEC DES AROMES CHAUDS**
MIT HEISSEN AROMASTOFFEN AROMATISIERTE SAUERMILCHPRODUKTE MIT NIEDRIGEM SÄUREGRAD
LOW ACIDITY FERMENTED DAIRY PRODUCTS FLAVOURED WITH WARM FLAVOURS

(43) Date de publication de la demande: 01.08.2001
(73) Titulaire: COMPAGNIE GERVAIS DANONE, 75009 Paris (FR)
(72) Inventeur: PAQUET, Denis, F-92140 Clamart (FR); CARON, Jean-Pierre, F-92400 Courbevoie (FR); DE VILLEROCHE, Jacques, F-78000 Versailles (FR); LAM, David, F-78360 Montesson (FR); SKROCHOWSKI, Paul, F-91480 Quincy sous Senard (FR); DOAT, Stéphane, F-92290 Chatenay Malabry (FR); TRIAL, Nathalie, F-92160 Anthony (FR); TARODO DE LA FUENTE, Blas, F-34820 Assas (FR); CUQ, Jean-Louis, F-34980 Saint Gely du Fesc (FR)
(74) Mandataire: Vialle-Presles, Marie José
(86) Numéro de dépôt international: PCT/FR1998/002120
(87) Numéro de publication internationale: WO 2000/019831

(56) Documents cités:
- EP-A- 0 233 566
- DE-A- 2 122 904
- FR-A- 886 051
- FR-A- 2 197 521
- FR-A- 2 224 096
- FR-A- 2 665 057
- US-A- 4 228 189
- F. KOSIKOWSKI: "Properties of flavoured frozen yogurts" JOURNAL OF FOOD PROTECTION, vol. 44, no. 11, 1981, pages 853-856, XP002088787
- M. SPECK: "Properties of non-fruit yogurt" CULTURED DAIRY PRODUCTS JOURNAL , vol. 18, no. 4, 1983, pages 6-9, XP002088788
- HAGGAG H F ET AL: "PRODUCTION OF ZABADI, FROM ULTRAFILTERED BUFFALO'S MILK" FOOD CHEMISTRY, vol. 30, no. 1, 1 janvier 1988, pages 29-36, XP000572051
- J.DAIRY SCI 79:1713 1996,
- A.Y.TAMIME AND R.K.ROBINSON YOGHURT SCIENCE AND TECHNOLOGY,PERGAMON PRESS 1985, pages 64 - 402+403
- H.J.KLUPSCH: 'Saure Milcherzeugnisse-Milchgetränke und Desserts' VERLAG TH.MANN 1984, page 199

## Description

La présente Invention est relative à de nouveaux produits laitiers fermentés, aromatisés par incorporation d'arômes chauds.

On désigne sous l'appellation générale d'arômes "chauds" des arômes tels que chocolat, caramel, vanille, café, praliné, nougat et/ou les arômes de fruits oléagineux (noix, noisette, amande, pistache, cajou), etc...

Ces parfums, généralement très demandés par les consommateurs, sont largement utilisés par l'industrie agro-alimentaire pour la fabrication de desserts. Cependant, leur utilisation pour aromatiser des produits laitiers fermentés (par exemple du type yoghourt, boissons laitières, fromages frais ou leurs dérivés) est limitée.

Des produits laitiers fermentés (en particulier de type yoghourt) aromatisés avec des arômes chauds, ont été proposés. Ainsi, le Brevet Français FR 88605 du 4 octobre 1943 divulgue un procédé de préparation d'une boisson lactée fermentée comprenant de la poudre de cacao en suspension et possédant une acidité titrable de 0,6 à 0,7%.

Cependant ces produits ne sont pas appréciés de la majeure partie des consommateurs, du fait de la présence d'un arrière-goût qui dénature la saveur véritable des arômes utilisés. Kosikowski F.V. et al. ("Properties of flavoured frozen yogurts" JOURNAL OF FOOD PROTECTION. vol.44, n°11, 1981, pages 853-856), et Speck *et al*. (Speck M. et al. « Properties of frozen non-fruit yogurt » CULTURED DAIRY PRODUCT JOURNAL, vol. 18, no.4, 1983, pages 6-9) rapportent qu'il existe un conflit entre la saveur acide du yoghourt et la saveur apportée par l'arôme du chocolat ou de café et que les yoghourts congelés de faible acidité présentent de meilleures qualités organoleptiques.

Cette incompatibilité organoleptique entre les arômes chauds et les produits laitiers fermentés, apparaît due essentiellement à l'acidité de ces derniers, qui résulte de la production d'acide lactique, entraînant un abaissement du pH, au cours de la fermentation.

Les produits laitiers fermentés ont habituellement un pH après fermentation compris entre 4 et 5 environ, et une acidité Dornic supérieure à 80°D, généralement comprise entre 80 et 150°D environ, selon leur teneur en protéines.

L'acidité Dornic reflète le pouvoir tampon du produit laitier au cours de sa fermentation ; elle est exprimée en degrés Dornic (°D) : un degré Dornic correspond à la quantité (en ml) de soude N/9 nécessaire pour amener le pH du produit à pH=8,3 , ou bien à la quantité d'acide lactique (en mg) dans 10 ml de produit.

Les Inventeurs ont découvert que si l'on abaissait l'acidité Dornic d'un produit laitier fermenté tout en maintenant son pH à une valeur inférieure ou égale à 5, en abaissant le pouvoir tampon du lait utilisé pour sa préparation, par déminéralisation et/ou par diminution de la teneur en protéines, notamment en phosphocaséinate de calcium, on obtenait une préparation pouvant être aromatisée avec des arômes "chauds", sans dénaturer ceux-ci.

Pour déminéraliser à la fois la phase soluble et la phase micellaire du lait, on utilise un procédé mettant en oeuvre une déminéralisation partielle du lait sous pression de CO₂, puis la remontée du pH du lait déminéralisé, par dégazage.

La présente invention a pour objet un procédé d'obtention d'un produit laitier fermenté aromatisé, caractérisé en ce qu'il comprend :
- la préparation d'une matière première laitière, en abaissant le pouvoir tampon du lait par diminution de sa teneur en sels minéraux, par les étapes suivantes :
   a) la solubilisation de CO₂ sous pression (carbonatation), dans un lait (éventuellement dilué ou concentré au préalable), dont la concentration en protéines est comprise entre environ 25 et environ 150 g/l, afin d'abaisser le pH dudit lait jusqu'à une valeur comprise entre 5 et 6,5, de préférence entre 5 et 5,8 ;
   b) l'élimination partielle par diafiltration sous pression de CO₂, des sels minéraux solubles (à savoir les minéraux initialement présents dans la phase soluble du lait, et les sels minéraux relargués de la phase micellaire par l'acidification), jusqu'à obtenir une quantité de calcium par gramme de protéines égale à 30% à 80%, de préférence 40 à 70%, de la quantité initiale ;
   c) l'élévation du pH du rétentat de diafiltration, par dégazage du CO₂ (décarbonatation), jusqu'à retour à un pH voisin du pH d'un lait non carbonaté ayant la même concentration en protéines que celle dudit rétentat de diafiltration ;
- la fermentation de ladite matière première laitière par au moins un ferment lactique ;
- l'addition, préalablement à l'étape de fermentation ou postérieurement à celle-ci, d'une préparation d'arôme choisi parmi les arômes de chocolat, caramel, vanille, café, praliné, nougat, noix, noisette, amande, pistache, cajou.

Le lait utilisé peut provenir d'une espèce quelconque de mammifère, ou être un mélange de laits de différentes espèces ; il peut s'agir pour tout ou partie, de lait reconstitué à partir de lait en poudre ; il peut éventuellement être partiellement ou totalement écrémé, supplémenté ou non en vitamines, sucres, ou sels minéraux.

Selon un mode de mise en oeuvre préféré dudit procédé, le lait utilisé est concentré, jusqu'à obtention de la concentration en protéines souhaitée, soit préalablement à la carbonatation de l'étape a), soit au cours de la diafiltration de l'étape b).

Selon un autre mode de mise en oeuvre dudit procédé, la décarbonatation de l'étape c) est effectuée jusqu'à retour à un pH au moins égal à 6,2 et de préférence supérieur ou égal à 6,4.

Selon encore un autre mode de mise en oeuvre dudit procédé, les étapes a) et b) sont effectuées à une température comprise entre 0 et 20°C, et l'étape c) à une température d'environ 20°C à 70°C et de préférence entre 20 et 40°C.

Le pH obtenu à l'issue de l'étape a) dépend de la quantité de CO₂ solubilisée dans la phase aqueuse, qui dépend elle-même de la pression employée et de la température de la solution.

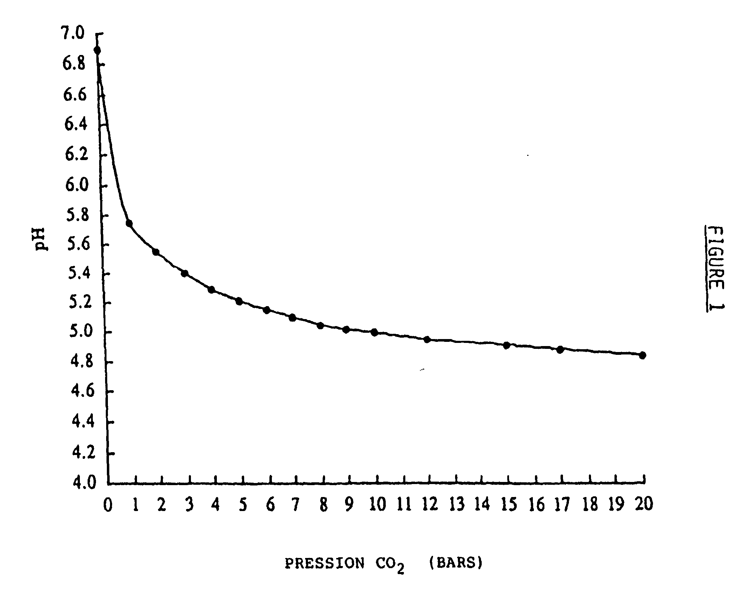

La figure 1 représente un abaque qui permet de déterminer la pression de saturation en CO₂ à appliquer lors de la carbonatation, dans le cas d'un lait maigre à 4°C, pour obtenir un pH déterminé (valeurs à l'équilibre de saturation de CO₂).

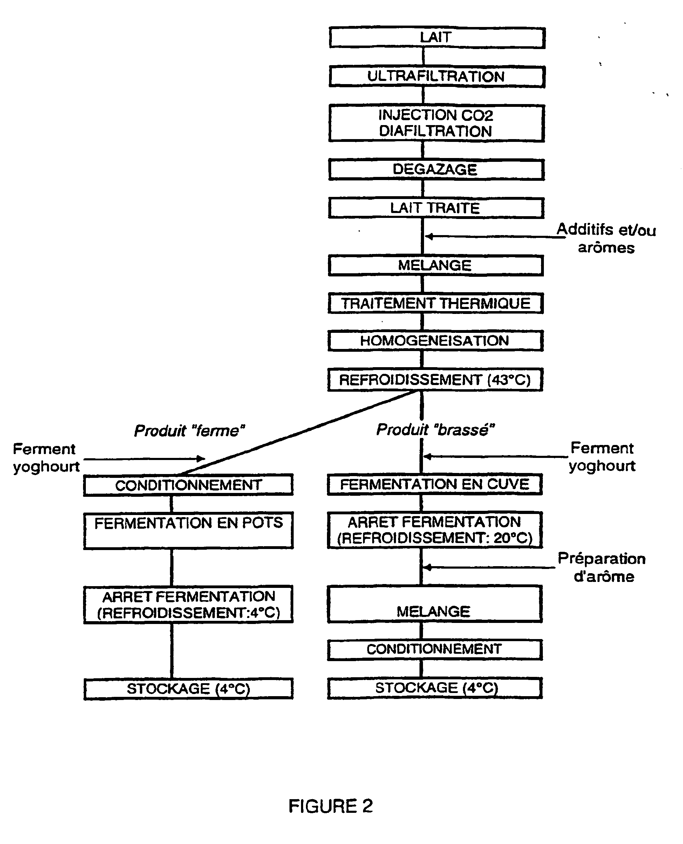

La figure 2 représente un schéma des différentes étapes de deux modes de mise en oeuvre préférés du procédé.

Le dégazage provoque un retour du gaz carbonique de l'état dissous à l'état gazeux (décarbonatation).

La matière première laitière obtenue par ce procédé peut en outre être diluée, comme indiqué ci-dessus, à un taux de dilution avantageusement inférieur ou égal à 9.

Ce procédé permet d'obtenir l'élimination de 40 à 70% des minéraux du lait.

Préalablement à la fermentation, les matières premières laitières obtenues par l'un des procédés permettant d'abaisser le pouvoir tampon décrits ci-dessus, peuvent être éventuellement soumises à un traitement thermique, du type pasteurisation ou stérilisation, à une température comprise entre 60°C et.150°C, de préférence comprise entre 72 et 140°C, pendant une durée comprise entre 1 seconde et 20 minutes.

Ces matières premières laitières peuvent également être supplémentées par différents additifs, permettant de faciliter la fermentation (en compensant les pertes en substances nutritives résultant de la diafiltration, comme par exemple le lactose, les acides aminés et peptides, les vitamines, les enzymes, etc.), ou d'obtenir une texture plus épaisse, comme des agents de texture, et/ou du caséinate alimentaire et/ou des protéines végétales.

Des agents de texture utilisables sont en particulier les épaississants, les gélifiants, les émulsifiants, les stabilisants alimentaires comme par exemple les amidons et leurs dérivés, la gélatine, les gommes, etc.

Des caséinates alimentaires utilisables sont en particulier les caséinates de calcium, sodium, potassium, ammonium.

Des protéines végétales utilisables sont par exemple du lait de soja, des concentrats et isolats de soja.

La préparation d'arôme chaud peut également, si on le souhaite, être additionnée avant fermentation.

La fermentation par des ferments lactiques est effectuée selon les procédures classiques. Les ferments lactiques habituels, à savoir les *Lactobacillus* sp., les *Lactococcus* sp., ainsi que les *Bifidobacteriae* sp., et en particuüer les ferments utilisés pour la fabrication des yoghourts sont utilisables dans le cadre du procédé conforme à l'Invention ; de préférence, on utilisera au moins une bactérie lactique choisie dans le groupe constitué par *Lactobacillus bulgaricus*, et *Streptococcus thermophilus*.

Les produits laitiers fermentés obtenus à partir de matière première laitière résultant de l'un des procédés permettant d'abaisser le pouvoir tampon décrits ci-dessus, constituent une « matière blanche » à laquelle on ajoutera, pour obtenir un produit laitier fermenté aromatisé, une préparation d'arôme chaud, si celle-ci n'a pas été ajoutée préalablement à la fermentation.

Des produits laitiers fermentés, utilisables comme « matière blanche » pour l'obtention, conformément à l'invention, de produits aromatisés sont par exemple ;
- des produits épais de type yoghourt ou fromage fiais, caractérisés en ce que, pour une teneur (p/p) en protéines comprise entre 7% et 15%, et une teneur (p/p) en matières grasses inférieure ou égale à 15% environ, de préférence comprise entre 3 et 12%, leur pH est compris entre 4 et 5,5, et leur acidité Dornic entre 60 et 120°D, de préférence 70 à 110°D ;
- des produits de type yoghourt, caractérisés en ce que, pour une teneur (p/p) en protéines comprise entre 4% et 7%, et une teneur (p/p) en matières grasses inférieure ou égale à 10% environ, de préférence comprise entre 0 et 5%, leur pH est compris entre 4 et 5,5, et leur acidité Dornic entre 30 et 90°D, de préférence 50 à 70°D ;
- des produits de type boisson fermentée, caractérisés en ce que, pour une teneur (p/p) en protéines comprise entre 2% et 5%, et une teneur en matières grasses (p/p) inférieure ou égale à 5% environ, de préférence de l'ordre de 1,5%, leur pH est compris entre 4 et 5 et leur acidité Dornic entre 30 et 70°D, de préférence entre 40 et 60°D.

Si nécessaire, pour parvenir au pH et à l'acidité Dornic qui caractérisent les produits aromatisés obtenus conformément à l'invention, les produits fermentés utilisés comme matière blanche sont dilués, par exemple, par la préparation d'arôme chaud. Avantageusement, ladite préparation d'arôme chaud représente entre 1 et 50%, de préférence entre 20 et 50% en volume du produit final.

L'addition de la préparation d'arôme chaud avant ou après fermentation est effectuée selon le produit que l'on souhaite obtenir. Par exemple, si l'on souhaite obtenir un produit fermenté de type yoghourt ferme, on ajoutera une préparation d'arôme préalablement à la fermentation, qui pourra être effectuée en pots ; si au contraire, c'est un produit fermenté de type brassé, qui est recherché, on préférera ajouter une préparation de l'arôme choisi au produit fermenté.

On peut ainsi obtenir des produits fermentés aromatisés au chocolat, au caramel, au praliné, etc... ou avec un mélange de ces arômes, en ajoutant des préparations des arômes correspondants.

La préparation d'arôme peut éventuellement contenir, outre l'arôme ou les arômes choisis, différents additifs tels que des matières grasses (par exemple crème et/ou matière grasse végétale) des émulsifiants, des épaississants, etc...

Des sirops, des poudres, ou des extraits aromatisés peuvent également être utilisés.

Les produits laitiers fermentés aromatisés obtenus conformément à l'invention peuvent être en particulier des yoghourts brassés, des yoghourts fermes, des yoghourts à boire, des fromages frais, des laits fermentés, des desserts à base de yoghourt ou de lait fermenté, etc... Ces produits peuvent également être utilisés comme matières premières pour l'obtention de produits laitiers dérivés, tels que par exemple des produits laitiers glacés (glaces au yoghourt), des produits du type pâtes à tartiner, etc...

Les produits laitiers fermentés aromatisés obtenus conformément à l'invention ont une faible acidité Dornic, tout en conservant un pH < 5, ce qui permet de garantir une bonne sécurité alimentaire en empêchant le développement d'une flore contaminante pendant la durée de vie du produit.

Ladite acidité Dornic est de 20 à 80 degrés Dornic, de préférence de 30 à 70°D, et avantageusement de 40 à 60°D, pour un pH de 4 à 5,5, de préférence de 4,5 à 4,9

Bien qu'une acidité allant jusqu'à 80°D puisse parfois être acceptable, par exemple dans le cas de certains produits aromatisés avec du chocolat, il est préférable dans la plupart des cas, pour une conservation optimale des qualités organoleptiques, notamment lorsque des arômes tels que le café sont utilisés, que l'acidité ne dépasse pas 70°D, et avantageusement 60°D.

De préférence, ces produits laitiers fermentés aromatisés ont une teneur (p/p) en protéines de 1 à 10 %, et avantageusement de 2 à 6,5%.

De manière préférée :
- dans le cas d'un produit de type yoghourt ou de type fromage frais, pour une teneur (p/p) en protéines de 2% à 10%, et une teneur (p/p) en matières grasses inférieure ou égale à 15% environ, de préférence de 3 à 12%, son pH est de 4 à 5,5, et son acidité Dornic de 20 à 120°D, de préférence 40 à 70°D.
- dans le cas d'un produit de type boisson fermentée, pour une teneur (p/p) en protéines de 1 % à 5%, et une teneur (p/p) en matières grasses inférieure ou égale à 5% environ, de préférence de l'ordre de 1,5%, son pH est de 4 à 5 et son acidité Dornic de 20 à 70°D, de préférence de 30 à 60°D.

Les produits fermentés aromatisés obtenus conformément à l'invention peuvent donc contenir des ferments vivants, et être conservés pendant la durée habituelle pour les produits frais (28 jours), sans perdre leur qualités organoleptiques ; si on le souhaite, ils peuvent également subir un traitement thermique du type pasteurisation ou stérilisation (dans les conditions définies ci-dessus), pour prolonger leur conservation.

La présente Invention sera mieux comprise à l'aide du complément de description qui va suivre, qui se réfère à des exemples non-limitatifs de préparation de produits laitiers fermentés aromatisés par mise en oeuvre du procédé conforme à la présente Invention.

Il doit être bien entendu toutefois que ces exemples sont donnés uniquement à titre d'illustration de l'objet de l'Invention dont ils ne constituent en aucune manière une limitation.

### EXEMPLE 1 :OBTENTION D'UN YOGHOURT BRASSE, AROMATISE AU CHOCOLAT

Un lait de vache totalement écrémé a fait l'objet d'une ultrafiltration sur membrane minérale (TECH SEP, seuil de coupure 15 kDa) jusqu'à une teneur en protéine de 6,4% dans le rétentat (1 er étage). Ce rétentat est ensuite carbonaté à une température d'environ 4°C avec une quantité de CO₂ correspondant à une pression de saturation de 2 bars, jusqu'à un pH d'environ 5,5. On procède à une diafiltration, en continu dans les conditions suivantes : on ajoute 2 volumes d'eau par volume de lait concentré dans le 1 er étage, et on élimine par le perméat le même volume que le volume d'eau ajouté. Cette opération a lieu en continu, et permet de conserver la teneur en protéine initiale du rétentat (6,4%).

Le calcium et les autres sels minéraux sont partiellement éliminés avec le perméat, ainsi qu'une partie du lactose, et des autres constituants solubles du lait. Par exemple, pour un lait écrémé contenant initialement 1230ppm de calcium pour 32,2g/kg de protéines, et 50 g/kg de lactose, on obtient dans les conditions de carbonatation et de diafiltration définies ci-dessus, un rétentat à 63g/kg de protéines et 1410 ppm de calcium, et 17 g/kg de lactose, soit une diminution de la teneur en calcium par gramme de protéine.

La teneur en lactose du rétentat est fonction du rapport entre la masse d'eau ajoutée pour la diafiltration et la masse du rétentat, comme le montre le tableau I ci-dessous :

**TABLEAU I**

| masse ajoutée/masse du rétentat | Lf (%) | facteur de dilution (Lf/Li) |
|---|---|---|
| 0 | 5,0 | 1 |
| 0,25 | 4,0 | 0,8 |
| 0,50 | 3,3 | 0,66 |
| 0,67 | 3,0 | 0,60 |
| 1,0 | 2,5 | 0.50 |
| 1,5 | 2,0 | 0,40 |
| 2,0 | 1,7 | 0,34 |
| 4,0 | 1,0 | 0,20 |

| | | |
|---|---|---|
| Lf = lactose final dans le rétentat | | |
| Li = lactose initial du lait (théoriquement 50g/kg soit 5%) | | |

Le rétentat est alors ramené à la pression atmosphérique, ce qui provoque un dégazage du CO₂, puis le dégazage est poursuivi sous vide, jusqu'à obtenir une remontée du pH à 6,4 (à 25°C).

On ajoute alors au rétentat les ingrédients suivants (exprimés en % en poids du mélange final):
- Amidon (hydroxypropylé) de mais cireux 0,7
- Gélatine* 0,3
- Eau 5,0
- Saccharose 3,0
- Crème à 40% de matières grasses 12,0
*Force de gel : 250 blooms= (250 grammes)

Le mélange fait alors l'objet d'un traitement thermique à 95°C pendant 4 minutes, puis est homogénéisé dans un homogénéisateur APV/RANNIE, 120 1/heure (30 bars), et refroidi à 43°C avant d'être ensemencé avec une culture de *L. bulgaricus et S. thermophilus.*

La fermentation est effectuée dans une étuve régulée à 43°C, jusqu'à un pH de 4,6 à 4,7. L'arrêt de la fermentation est effectué par refroidissement de la préparation jusqu'à 20°C.

On prépare un mélange, dont la composition (en %p/p) est la suivante :
- Crème à 40% matière grasse 24,0
- Amidon (natif) de maïs cireux 3,5
- Chocolat noir à croquer rapé 4,5
- Poudre de cacao à 21% matière grasse 4,5
- Saccharose 27,5
- Eau q.s.p 100

Le mélange est stérilisé à 130°C pendant 30 secondes, et après refroidissement, est mélangé avec un poids égal de la préparation fermentée.

Le mélange est réparti dans des pots, qui sont stockés dans une enceinte réfrigérée et ventilée (4°C). Le pH du produit final est d'environ 5,2 pour une acidité Dornic d'environ 45°D.

### EXEMPLE 2 :OBTENTION D'UN YOGHOURT FERME, AROMATISE AU CHOCOLAT

Un lait de vache totalement écrémé est ultrafiltré, puis carbonaté, diafiltré, et dégazé, comme indiqué à l'exemple 1.

On ajoute alors au rétentat de diafiltration les ingrédients suivants (exprimés en % en poids du mélange final):
- Chocolat noir à croquer râpé 4,0
- Poudre de cacao à 21% matière grasse 0,4
- Crème à 40% matière grasse 8,5
- Saccharose 16,0
- Eau 10,0

Le mélange fait alors l'objet d'un traitement thermique à 95°C pendant 4 minutes, puis est homogénéisé dans un homogénéisateur APV/RANNIE, 120 l/heure (200 bars), et refroidi à 43°C avant d'être ensemencé avec une culture de *L. bulgaricus et S. thermophilus.*

La fermentation est effectuée en pots dans une étuve régulée à 43°C, jusqu'à un pH de 4,6 à 4,8. L'arrêt de la fermentation est effectué par refroidissement des pots jusqu'à 4°C.

Les pots sont stockés dans une enceinte réfrigérée et ventilée (4°C). Le pH du produit final est d'environ 4,75 pour une acidité Dornic d'environ 65°D.

## Revendications

1. Procédé d'obtention d'un produit laitier fermenté aromatisé, **caractérisé en ce qu'**il comprend :
- la préparation d'une matière première laitière, en abaissant le pouvoir tampon du lait par diminution de sa teneur en sels minéraux, par les étapes suivantes : a) la solubilisation de CO₂ sous pression, dans un lait dont la concentration en protéines est comprise entre 25 et 150 g/l, afin d'abaisser le pH dudit lait jusqu'à une valeur comprise entre 5 et 6,5, de préférence entre 5 et 5,8 ; b) l'élimination partielle par diafiltration sous pression de CO₂, des sels minéraux solubles, jusqu'à obtenir une quantité de calcium par gramme de protéines égale à 30% à 80%, de préférence 40 à 70%, de la quantité initiale ; c) l'élévation du pH du rétentat de diafiltration, par dégazage du CO₂, jusqu'à retour à un pH voisin du pH d'un lait non carbonaté ayant la même concentration en protéines que celle dudit rétentat de diafiltration ;
- la fermentation de ladite matière première par au moins un ferment lactique ;
- l'addition, préalablement à l'étape de fermentation ou postérieurement à celle-ci, d'une préparation d'arôme choisi parmi les arômes de chocolat, caramel, vanille, café, praliné, nougat, noix, noisette, amande, pistache, cajou.

2. Procédé selon la revendication 1, **caractérisé en ce que** la fermentation est effectuée par au moins une bactérie choisie dans le groupe constitué par les Lactobacillus sp., les Lactococcus sp., et les Bifidobacteriae sp.

3. Procédé selon la revendication 2, **caractérisé en ce que** la préparation d'arôme représente entre 1 et 50% en volume du produit final aromatisé.

4. Procédé selon l'une quelconque des revendications 1 à 3, **caractérisé en ce que** le produit aromatisé préparé a une acidité Dornic de 20 à 80 deg.D, et un pH de 4 à 5,5.

5. Procédé selon la revendication 4, **caractérisé en ce que** le produit aromatisé préparé a une acidité Dornic de 30 à 70 deg.D, et un pH de 4,5 à 4,9.

6. Procédé selon la revendication 5, **caractérisé en ce que** le produit aromatisé préparé a une acidité Dornic de 40 à 60 deg.D.

7. Utilisation d'un procédé selon une quelconque des revendications 1 à 6 dans la préparation de produits laitiers glacés.

## Claims

1. Method of obtaining a flavoured fermented dairy product, **characterised in that** it comprises:
- preparing a dairy raw material, by lowering the buffering power of the milk by reducing its content of mineral salts, by the following steps: a) dissolving CO2 under pressure in a milk having a protein concentration of between 25 and 150 g/l, in order to lower the pH of said milk to a value of between 5 and 6.5, preferably between 5 and 5.8; b) partially eliminating the soluble mineral salts by diafiltration under CO₂ pressure until a quantity of calcium per gram of proteins of 30% to 80%, preferably 40 to 70%, of the initial quantity is obtained; c) raising the pH of the diafiltration retentate by degassing the CO₂ until the pH returns to a level close to that of a non-carbonated milk having the same protein concentration as said diafiltration retentate;
- fermenting said raw material using at least one lactic ferment;
- adding, prior to the fermentation step or subsequent thereto, a flavouring preparation selected from among the chocolate, caramel, vanilla, coffee, praline, nougat, walnut, hazelnut, almond, pistachio and cashew nut flavours.

2. Method according to claim 1, **characterised in that** the fermentation is carried out using at least one type of bacteria selected from among the *Lactobacillus* sp., the *Lactococcus* sp., and the *Bifidobacteriae* sp.

3. Method according to claim 2, **characterised in that** the flavouring preparation constitutes between 1 and 50% by volume of the flavoured end product.

4. Method according to any one of claims 1 to 3, **characterised in that** the flavoured product prepared has a Dornic acidity of 20 to 80°D, and a pH of 4 to 5.5.

5. Method according to claim 4, **characterised in that** the flavoured product prepared has a Dornic acidity of 30 to 70°D, and a pH of 4.5 to 4.9.

6. Method according to claim 5, **characterised in that** the flavoured product prepared has a Dornic acidity of 40 to 60°D.

7. Use of a method according to any one of claims 1 to 6 in the preparation of iced dairy products.

## Patentansprüche

1. Verfahren zum Erhalt eines aromatisierten fermentierten Milchprodukts, **dadurch gekennzeichnet, dass** das Verfahren umfasst:
- Bereitstellung eines Molkereirohstoffs durch Vermindern der Pufferwirkung der Milch durch Verringern des mineralischen Salzgehalts, das die folgenden Schritte umfasst:
a) Lösen von CO₂ unter Druck in einer Milch, deren Konzentration an Protein einen Bereich zwischen 25 bis 150 g/l umfasst, um deren pH auf einen Wert zwischen 5 bis 6,5, bevorzugt 5 bis 5,8 zu senken;
b) teilweises Entfernen der löslichen mineralischen Salze durch Diafiltration unter CO₂-Druck bis zum Erhalt einer Menge gleich 30 % bis 80 % der Anfangsmenge, bevorzugt 40 bis 70% an Calcium pro Gramm Protein;
c) Anheben des pH des Rückstands der Diafiltration durch Entgasen des CO₂, bis zur Rückkehr zu einem pH, der dem einer nicht kohlendioxid-haltigen Milch, naheliegt, die dieselbe Proteinkonzentration wie der Rückstand der Diafiltration hat;
- Fermentierung des genannten Molkereirohstoffs durch mindestens ein Milchferment;
- Zugabe einer Aromazubereitung, ausgewählt aus den Aromen Schokolade, Karamel, Vanille, Kaffee, Nougat, Türkischer Honig, Nuss, Haselnuss, Mandel, Pistazie, Cashewnuss, vor dem Schritt des Fermentierens oder anschließend daran.

2. Verfahren gemäß Anspruch 1, **dadurch gekennzeichnet, dass** die Fermentation mit mindestens einer Bakterienart, ausgewählt aus der Gruppe die aus *Lactobacillus sp., Lactococcus sp.* und *Bifidobacteriae sp.* besteht, durchgeführt wird.

3. Verfahren nach Anspruch 2, **dadurch gekennzeichnet, dass** die bereitgestellte Aromazubereitung zwischen 1 und 50% des Volumens des aromatisierten Endprodukts darstellt.

4. Verfahren gemäß einem der Ansprüche 1 bis 3, **dadurch gekennzeichnet, dass** das bereitgestellte aromatisierte Produkt einen Säuregrad Domic von 20 bis 80°D und einen pH von 4-5,5 aufweist.

5. Verfahren nach Anspruch 4, **dadurch gekennzeichnet, dass** das bereitgestellte aromatisierte Produkt einen Säuregrad Domic von 30 bis 70°D und einen pH von 4,5-4,9 aufweist.

6. Verfahren nach Anspruch 5, **dadurch gekennzeichnet, dass** das bereitgestellte aromatisierte Produkt einen Säuregrad Domic von 40 bis 60°D aufweist.

7. Verwendung eines Verfahrens gemäß einem der Ansprüche 1 bis 6 bei der Herstellung von gefrorenen Milchprodukten.
